# EUROPEAN PATENT SPECIFICATION

(11) **EP 3 467 041 B1**
(45) Date of publication and mention of the grant of the patent: **09.12.2020**
(21) Application number: 17806906.8
(22) Date of filing: 16.05.2017
(51) Int. Cl.: C08L 79/08, C08G 73/14, C08G 73/10, C08J 5/18, C08J 7/04

(54) **HIGH-STRENGTH TRANSPARENT POLYAMIDIMIDE AND METHOD FOR PREPARING SAME**
HOCHFESTES TRANSPARENTES POLYAMID UND VERFAHREN ZUR HERSTELLUNG DAVON
POLYAMIDE-IMIDE TRANSPARENT HAUTE RÉSISTANCE ET SON PROCÉDÉ DE PRÉPARATION

(30) Priority: 01.06.2016 KR 20160068134; 01.06.2016 KR 20160068150; 01.06.2016 KR 20160068165; 01.06.2016 KR 20160068171
(43) Date of publication of application: 10.04.2019
(73) Proprietor: LG Chem, Ltd., Seoul 07336 (KR)
(72) Inventor: YUN, Cheolmin, Daejeon 34122 (KR); SUH, Jun Sik, Daejeon 34122 (KR); KIM, Kyungjun, Daejeon 34122 (KR)
(74) Representative: Goddar, Heinz J.
(86) International application number: PCT/KR2017/005041
(87) International publication number: WO 2017/209413

(56) References cited:
- WO-A1-2013/048126
- WO-A1-2014/003451
- WO-A1-2014/092422
- WO-A1-2014/168423
- KR-A- 20130 029 129
- KR-A- 20130 071 650
- KR-A- 20130 074 167
- KR-A- 20130 074 168
- KR-A- 20140 120 058

## Description

### [Technical Field]

The present application claims the benefits of priority to Korean Patent Application No. 10-2016-0068134, filed June 1, 2016, Korean Patent Application No. 10-2016-0068150, filed June 1, 2016, Korean Patent Application No. 10-2016-0068165, filed June 1, 2016 and Korean Patent Application No. 10-2016-0068171, filed June 1, 2016.

The present invention relates to a colorless and transparent polyamide-imide having a mechanical property of high strength, and a method for manufacturing thereof.

### [Background Art]

Polyimide (PI) is a polymer having relatively low crystallinity or amorphous structure, and it has advantages such as easy manufacturing process, easy process to make a thin film and no crosslinkable moieties necessary for curing, as well as polymeric properties such as high transparency, excellent flame and chemical resistance, excellent mechanical and electrical properties, and dimensional stability due to its rigid chain structure. The polyimide is now widely used as an electrical and electronical material for the field of car and aerospace, a flexible circuit board, a liquid crystal alignment film for LCD, an adhesive as well as a coating agent.

However, even though the polyimide is a high performance polymer with excellent thermal stability, mechanical properties, chemical resistance and electrical properties, it does not satisfy the basic requirements for the display area such as colorless transparency, and the thermal expansion coefficient should be further lowered. For example, KAPTON sold by Dupont has low thermal coefficient of about 30 ppm/°C, but it also does not meet the requirement for the plastic substrate. Therefore, now studies for minimizing change in thermal history and optical properties while maintaining the basic properties of the polyimide are underway.

In general, aromatic polyimide has unique color of dark brown. The reason for this is that electrons can be excited due to a σ electron, a π electron, a nonbonding unshared electron pair within the imide structure, and it can be explained by the theory of charge transfer complex (hereinafter, called CT-complex) induced by π electrons of benzene within a main chain of the polyimide.

In general, the polyimide absorbs light of the wavelength below 400 nm to 500 nm of visible light region, and therefore it shows complementary color of yellow to red. In order to lower the CT-complex that is an disadvantage of the polyimide, a method of introducing an electron-withdrawing functional group having relatively strong electronegativity such as trifluoromethyl ((-CF₃), sulfone (-SO₂) and ether (-O-) to the main chain of the polyimide is used to lower resonance effect by limiting the movement of π electron. Also introducing a cyclo-olefin structure instead of benzene to the main chain of the polyimide can reduce π electron density to manufacture a colorless transparent polyimide film.

Meanwhile, polyamide-imide has been widely used as an industrial material in the electrical, mechanical, electronic and aerospace fields due to its excellent properties such as thermal resistance, mechanical strength and electrical property. Also, in general, structure of the polyamide-imide is different from that of the polyimide and is known to be soluble in an organic solvent, allowing for the application for an enamel varnish, a coating agent for electrical insulation and paint, which need solution casting.

However, for the application in the display area, it is still necessary to develop a polymer for the flexible display with lower thermal expansion coefficient, high solubility, transparency as well as thermal stability.

Wo 2014/003451 A1 discloses a polyimide and a polyimide film comprising the same wherein the polyimide includes amorphous silica particles having OH groups thereon.

### [Disclosure]

### [Technical Problem]

One object of the present invention is to provide polyamide-imide with enhanced transparency and mechanical strength.

Another object of the present invention is to provide a method for manufacturing the polyamide-imide.

Further object of the present invention is to provide high strength transparent polyamide-imide film manufactured with the polyamide-imide.

### [Technical Solution]

The above problems are solved in accordance with the subject-matter of the independent claims. Preferred embodiments result from the subclaims.

In order to accomplish the aforementioned object, disclosed herein is polyamide-imide consisting of a repeating structure of the following Formula 1a and a repeating structure of the following Formula 1b together 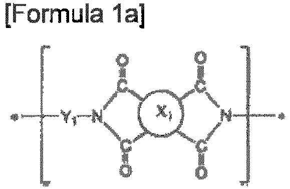 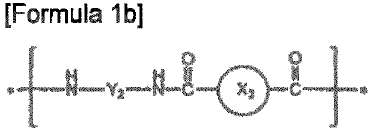 wherein,
X₁ is a tetravalent organic group of the following Formula 2 derived from tetracarboxylic dianhydride, 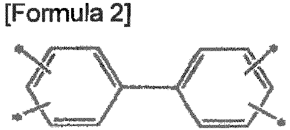 X₂ is a divalent organic group derived from the compound of the following Formula 3, 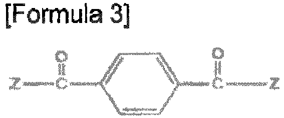 wherein,
Z is one selected from a hydroxyl group (-OH), a halide group selected from -Cl, -Br, -F and -I, and a C₁₋₅ alkoxyl group (-OR),
Y₁ and Y₂ are a divalent organic group derived from diamine, and at least one thereof contains a divalent organic group of the following Formula 4: 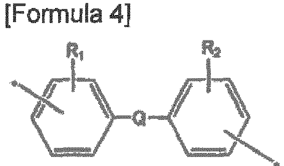 wherein,
   R₁ and R₂ are each independently a substituent selected from a halogen atom comprising -F, -Cl, -Br and -I, a hydroxyl group (-OH), a thiol group (-SH), a nitro group (-NO₂), a cyano group, a C₁₋₁₀ alkyl group, a C₁₋₄ halogenoalkoxyl group, a C₁₋₁₀ halogenoalkyl group, and a C₆₋₂₀ aryl group,
   Q is a single bond,
   wherein the compounds of the Formula 1a and the Formula 1b are the repeating structures of the following Formula 1a-1 and Formula 1b-1:

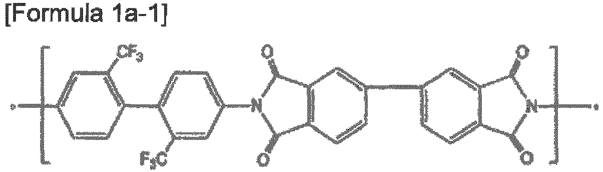

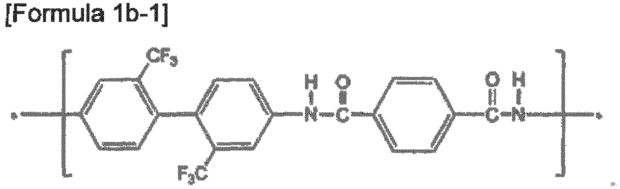

Further, the present invention provides a method for manufacturing the polyamide-imide.

In order to accomplish the other object, the present invention provides a polyamide-imide film comprising the polyamide-imide.

### [Advantageous Effects]

The present invention provides a polyamide-imide film with highly enhanced mechanical properties and heat resistance while maintaining transparency. The polyamide-imide with excellent transparency, heat resistance, mechanical strength and flexibility can be used in various fields such as a substrate for a device, a cover substrate for a display, an optical film, an integrated circuit (IC) package, an adhesive film, a multi-layer flexible printed circuit (FPC), a tape, a touch panel and a protection film for an optical disk.

### [Mode for Invention]

Various changes in form and details may be made to the presently disclosed embodiment and thus should not be construed as being limited to the aspects set forth herein. The presently disclosed embodiment is not limited to the aspects described in the present description, and thus it should be understood that the presently disclosed embodiment does not include every kind of variation example or alternative equivalent included in the spirit and scope of the presently disclosed embodiment. Also, while describing the aspects, detailed descriptions about related well-known functions or configurations that may diminish the clarity of the points of the aspects of the presently disclosed embodiment will be omitted.

Unless particularly stated otherwise herein, all the compounds or organic groups may be substituted or unsubstituted. Herein, the term 'substituted' means that at least one hydrogen atom in such a compound or substituent has been replaced by any one substituent selected from the group consisting of a halogen atom, a C₁₋₁₀ alkyl group, a halogenated alkyl group, a C₃₋₃₀ cycloalkyl group, a C₆₋₃₀ aryl group, a hydroxyl group, a C₁₋₁₀ alkoxyl group, a carboxyl group, an aldehyde group, an epoxy group, a cyano group, a nitro group, an amino group, a sulfonic acid group and derivatives thereof.

Further, unless particularly stated otherwise herein, the term 'combination thereof means that two or more functional groups are bonded by a single bond, a double bond, a triple bond or a linking group such as a C₁₋₁₀ alkylene group (e.g., methylene group (-CH₂), ethylene group (-CH₂CH₂-), etc.), a C₁₋₁₀ fluoroalkylene group (e.g., fluoromethylene group (-CF₂-), a perfluoroethylene group (-CF₂CF₂-), etc.), a hetero atom such as N, O, P, S or Si, or a functional group containing thereof (e.g., intramolecular carbonyl group (-C=O-), ether group (-O-), ester group (-COO-), heteroalkylene group containing -S-, -NH-, -N=N-, etc.), or two or more functional groups are connected by condensation.

Polyimide is a polymer composed of rigid aromatic groups and imide bonds, thereby having excellent mechanical properties and heat resistance, and it is variously used in many industrial fields based on such characteristics. However, the existing polyimide may be yellowed because it absorbs light in part of visible light region by electron transfer in chains and between chains, and the yellowness may hinder possibility as a highly heat resistant and transparent material for a display. This yellowness may be caused by charge transfer complex, and it may be more severely occurred as more packing is happened between the polyimide polymer chains.

In order to solve these existing problems, disclosed herein is polyamide-imide consisting of a repeating structure of the following Formula 1a and a repeating structure of the following Formula 1b together: 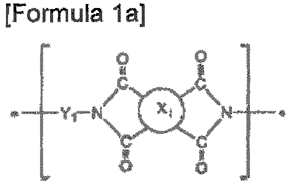 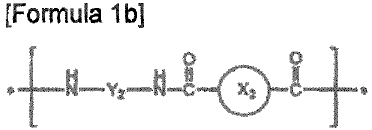 wherein,
X₁ is a tetravalent organic group of the following Formula 2 derived from tetracarboxylic dianhydride, 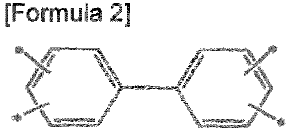 X₂ is a divalent organic group derived from the compound of the following Formula 3, 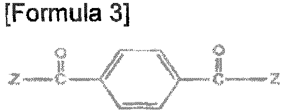 wherein,
Z is one selected from a hydroxyl group (-OH), a halide group selected from -Cl, -Br, -F and -I, and a C₁₋₅ alkoxyl group (-OR),
Y₁ and Y₂ are a divalent organic group derived from diamine, and at least one thereof contains a divalent organic group of the following Formula 4: 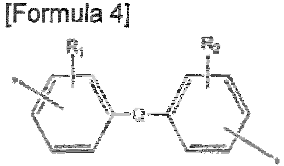 wherein,
   R₁ and R₂ are each independently a substituent selected from a halogen atom comprising -F, -Cl, -Br and -I, a hydroxyl group (-OH), a thiol group (-SH), a nitro group (-NO₂), a cyano group, a C₁₋₁₀ alkyl group, a C₁₋₄ halogenoalkoxyl group, a C₁₋₁₀ halogenoalkyl group, and a C₆₋₂₀ aryl group,
   Q is a single bond,
   wherein the compounds of the Formula 1a and the Formula 1b are the repeating structures of the following Formula 1a-1 and Formula 1b-1.

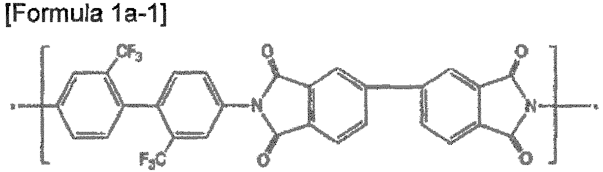

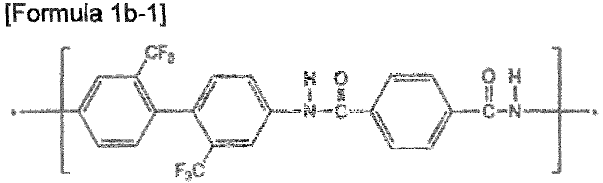

Polyamide may be introduced to the polyimide main chain of the present invention, and the polymer also has excellent mechanical properties and heat resistance like polyimide, and may improve optical characteristics because it can prevent packing between polymer chains and reduce charge transfer during copolymerization with the polyimide.

The hydrogen in the aromatic ring of the Formula 2 may be replaced by a substitute selected from a halogen atom comprising -F, -Cl, -Br and -I, a hydroxyl group (-OH), a thiol group (-SH), a nitro group (-NO₂), a cyano group, a C₁₋₁₀ alkyl group, a C₁₋₄ halogenoalkoxyl group, a C₁₋₁₀ halogenoalkyl group and a C₆₋₂₀ aryl group. For example, the halogen atom may be fluorine (-F), the halogenoalkyl may be a C₁₋₁₀ fluoroalkyl containing a fluorine atom selected from a fluoromethyl group, a perfluoroethyl group, a trifluoromethyl group and the like, the alkyl group may be selected from a methyl group, an ethyl group, a propyl group, an isopropyl group, a t-butyl group, a pentyl group and a hexyl group, and the aryl group may be selected from a phenyl group and a naphthalenyl group. More preferably, the substituent may be a fluorine atom and a fluoroalkyl group containing a fluorine atom.

The compound of the Formula 2 may be selected from tetracarboxylic dianhydrides having structures of the following Formula 2a to Formula 2e.

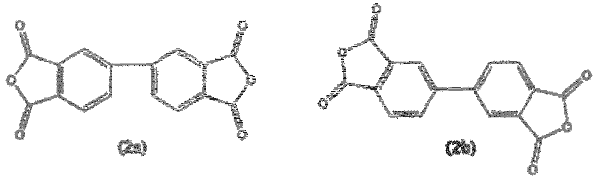

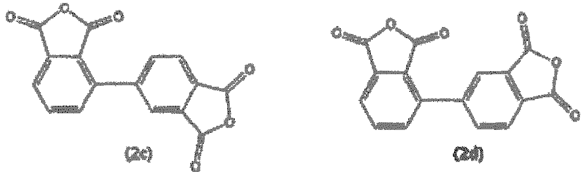

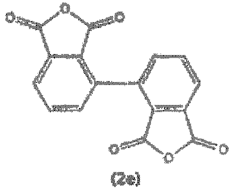

The hydrogen in the aromatic ring of the Formula 2 may be replaced by a substituent selected from a halogen atom consisting of -F, -Cl, -Br and -I, a hydroxyl group (-OH), a thiol group(-SH), a nitro group(-NO₂), a cyano group, a C₁₋₁₀ alkyl group, a C₁₋₄ halogenoalkoxyl group, a C₁₋₁₀ halogenoalkyl group and a C₆₋₂₀ aryl group. For example, the halogen atom may be fluorine (-F), the halogenoalkyl may be a C₁₋₁₀ fluoroalkyl containing a fluorine atom selected from a fluoromethyl group, a perfluoroethyl group, a trifluoromethyl group and the like, the alkyl group may be selected from a methyl group, an ethyl group, a propyl group, an isopropyl group, a t-butyl group, a pentyl group and a hexyl group, and the aryl group may be selected from a phenyl group and a naphthalenyl group. More preferably, the substituent may be a fluorine atom and a fluoroalkyl group containing a fluorine atom.

The compound of the Formula 3 may be dicarboxyl dichloride of the following Formula 3a or dicarboxylic acid of the following Formula 3b.

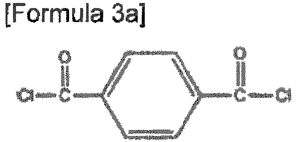

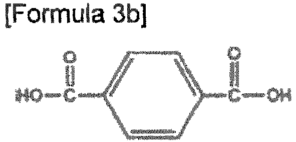

Further, the present invention provides a method for manufacturing the polyamide-imide comprising the steps of:
stirring a solution of diamine containing the structure of the following Formula 4;
adding tetracarboxylic dianhydride containing a tetravalent organic group of the following Formula 2 and the compound of the following Formula 3 to the diamine solution followed by reacting thereof to prepare a polyamide-imide precursor; and
imidizing the polyamide-imide precursor: 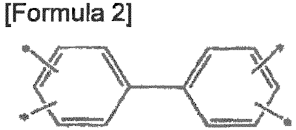 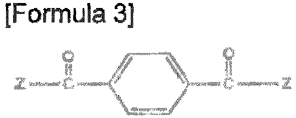 wherein,
   Z may be one selected from a hydroxyl group (-OH), a halide group selected from -Cl, -Br, -F and -I, and C₁₋₅ alkoxyl group (-OR), 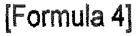 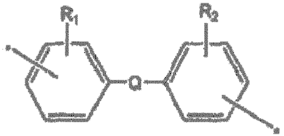 wherein,
   R₁ and R₂ may be each independently a substituent selected from a halogen atom comprising -F, -Cl, -Br and -I, a hydroxyl group (-OH), a thiol group (-SH), a nitro group (-NO₂), a cyano group, a C₁₋₁₀ alkyl group, a C₁₋₄ halogenoalkoxyl group, a C₁₋₁₀ halogenoalkyl group, and a C₆₋₂₀ aryl group.
   Q may be selected from the group consisting of a single bond, -O-, - CR₁₈R₁₉-, -C(=O)-, -C(=O)O-, -C(=O)NH-, -S-, -SO₂-, a phenylene group and a combination thereof, wherein R₁₈ and R₁₉ may be each independently selected from the group consisting of a hydrogen atom, a C₁₋₁₀ alkyl group and a C₁₋₁₀ fluoroalkyl group.

The polyamide-imide precursor contains repeating structures of the following Formula 5a and Formula 5b, and the polyimide repeating structure of the Formula 1a may be formed by imidizing the repeating structure of the Formula 5a.

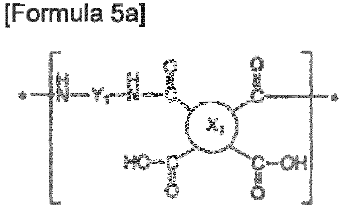

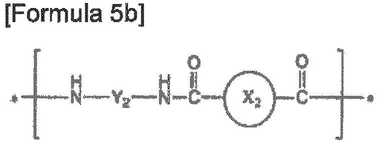

According to one embodiment, imidization rate of the structure containing the Formula 1a may be 80% to 100%, preferably 90% to 100%.

According to the present invention, in the Formula 1a to Formula 1b,
the repeating structure of the Formula 1 a and the repeating structure of the Formula 1b may be formed by polymerization at molar ratio of 1:1 to 1:5. It is preferred to contain the repeating structure of the Formula 1b at higher molar ratio than the repeating structure of the Formula 1a, and for example, it may be polymerized at molar ratio of 1:1.1 to 1:5, more preferably at molar ratio of 1:1.3 to 1:5. Namely, the tetracarboxylic dianhydride containing the tetravalent organic group of the Formula 2 and the compound of the following Formula 3 may be polymerized at molar ratio of 1:1 to 1:5. Preferably, the compounds may be added at molar ratio of 1:1.1 to 1:5, more preferably at molar ratio of 1:1.3 to 1:5, and reacted with the diamine of the Formula 4 to prepare a polyamide-imide precursor. At this time, if the compound of the Formula 3 is reacted in an amount of 90 mol% or more, preferably more than 80 mol%, processability may be deteriorated, i.e., it may be difficult to manufacture a film due to increased viscosity by gelation of a polymerization solution, and therefore, optical characteristics such as transparency of the film thus obtained may be affected due to its deteriorated uniformity. Further, if the tetracarboxylic dianhydride is contained in an amount of 90 mol% or more, preferably 80 mol% or more or 70 mol% or more, there may be a problems that chains of the precursor may be degraded because the polyamic acid structure is vulnerable to moisture, and the problem may cause deterioration of mechanical properties or the film.

According to one embodiment, polyamide-imide according to the present invention is a random copolymer wherein its repeating structures are randomly arranged. This arrangement may prevent charge transfer and regular arrangement in chains, and it may minimize partial crystallization by hydrogen bonds between chains of the polyamide. Thus, a polyamide-imide film having better transparency can be obtained.

By introducing a polyamide group to the existing polyimide structure, the present invention can provide more colorless transparent polyamide-imide having excellent heat resistance and mechanical properties because the polyamide group may increase distance between chains and therefore prevent charge transfer complex caused by packing and minimize yellowness caused by the charge transfer complex.

Further, by introducing a substituent having high electronegativity such as R₁ and R₂ to the diamine structure, the present invention can provide polyamide-imide having highly enhanced optical properties because the substituent can minimize charge transfer by inhibiting charge movement.

The polyamide-imide according to the present invention contains a repeating structure of the following Formula 1a-1 and Formula 1b-1.

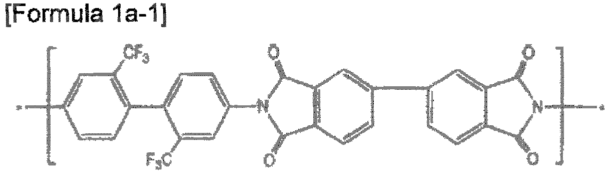

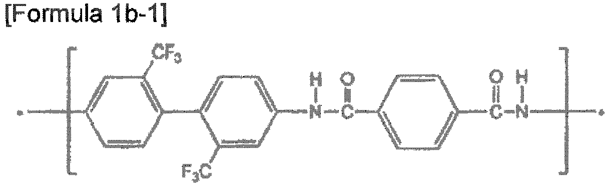

Polyamide-imides may be manufactured by further adding tetracarboxylic dianhydride of the following Formula 6: 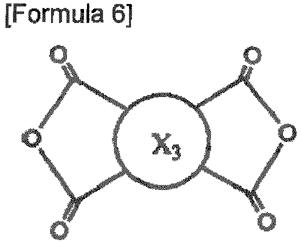 wherein, X₃ may be a tetravalent organic group containing two or more alicyclic and aromatic rings.

For example, X₃ may be a tetravalent organic group containing a C₃₋₂₄ aliphatic ring or a C₆₋₃₀ aromatic ring, for example, a tetravalent organic group of the following Formula 6a to Formula 6h, more preferably, a tetravalent organic group containing an aromatic or aliphatic ring having a rigid structure, i.e., a single ring structure, a structure wherein rings are linked by a single bond, or a polycyclic structure wherein rings are linked directly.

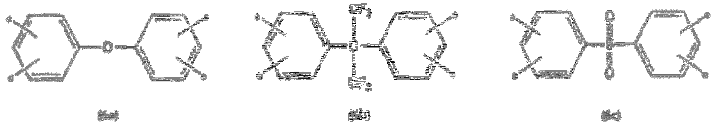

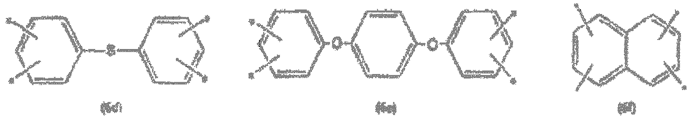

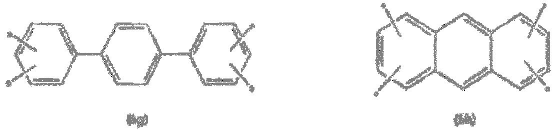

At least one hydrogen atom in the tetravalent organic group of the Formula 6a to Formula 6h may be replaced by a substituent selected from the group consisting of a C₁₋₁₀ alkyl group (e.g., from a methyl group, an ethyl group, a propyl group, an isopropyl group, a t-butyl group, a pentyl group and a hexyl group), a C₁₋₁₀ fluoroalkyl (e.g., a fluoromethyl group, a perfluoroethyl group, a trifluoromethyl group and the like), a C₆₋₁₂ aryl group (for example, a phenyl group, a naphthalenyl group and the like), a sulfonic acid group and a carboxyl group, preferably a C₁₋₁₀ fluoroalkyl group.

The acid dianhydride of the Formula 6 may be contained in an amount of 25 mol% or less, preferably 20 mol% or less, based on the total amount of the whole acid dianhydride, i.e., the total amount of the acid dianhydride of the Formula 2 and the acid dianhydride of the Formula 6.

In the polyamide-imide Y₁ and Y₂ may be the same or different, and at least one of should be derived from diamine containing the structure of the Formula 4.

Further, beside the divalent organic group of the Formula 4, Y₁ and Y₂ also may be derived from diamine containing a structure selected from C₁₂₋₃₀ aliphatic or alicyclic, C₁₂₋₃₀ aromatic divalent organic groups, or a combination thereof, wherein the aliphatic, alicyclic or aromatic divalent organic groups are linked directly or through a crosslinkable structure each other. For example, the diamine may contain a structure wherein at least one of C₁₂₋₃₀ monocyclic or polycyclic aromatic groups, C₁₂₋₃₀ monocyclic or polycyclic alicyclic groups are linked to each other via a single bond, and specifically, the divalent organic group may be a divalent organic group selected from the divalent organic groups of the following Formula 7a to Formula 7i.

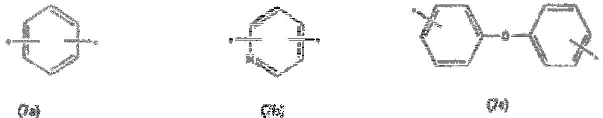

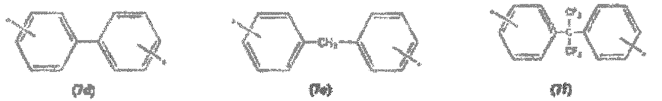

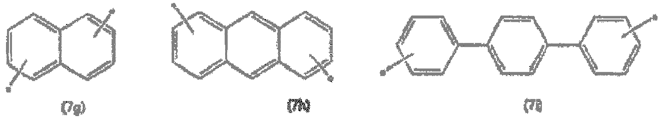

The hydrogen atom in the divalent organic group of the Formula 7a to the Formula 7i may be replaced by a substituent selected from the group consisting of a C₁₋₁₀ alkyl group (e.g., from a methyl group, an ethyl group, a propyl group, an isopropyl group, a t-butyl group, a pentyl group and a hexyl group), a C₁₋₁₀ fluoroalkyl (e.g., a fluoromethyl group, a perfluoroethyl group, a trifluoromethyl group and the like), a C₆₋₁₂ aryl group (for example, a phenyl group, a naphthalenyl group and the like), a sulfonic acid group and a carboxyl group, preferably a C₁₋₁₀ fluoroalkyl group, preferably a C₁₋₁₀ fluoroalkyl group.

In the repeating structures of the polyamide-imide precursor at least one repeating structure may include a divalent organic group and/or tetravalent organic group containing a fluorine-based substituent. Herein, the term 'fluorine-based substituent' means not only 'fluorine atom substituent' but also 'substituent containing a fluorine atom'. Preferably, the fluorine atom-containing substituent may be a C₁-C₁₀ or C₁-C₆ fluoroalkyl group. The fluorine-based substituent may be a C₁₋₁₀, preferably C₁₋₆ fluoroalkyl, and it may be contained in an amount of 30 mol% or more, preferably 40 mol% or more, or 60 mol% or more, and up to 100 mol%, preferably 90 mol% or less, or 80 mol% or less, based on the repeating structure of the whole polyamide-imide precursor.

The reaction of the tetracarboxylic dianhydride and the dicarboxylic acid or the dicarboxyl chloride with the diamine may be carried out by any common polymerization method such as solution polymerization, for manufacturing the polyamide-imide precursor, and specifically, the precursor may be manufactured by dissolving the diamine in an organic solvent, adding the tetracarboxylic dianhydride and the dicarboxylic acid or the dicarboxyl chloride to the resulting solution followed by polymerizing thereof. At this time, the total amount of the tetracarboxylic dianhydride and the dicarboxylic acid or the dicarboxyl chloride and the diamine may be mixed at molar ratio of 1:1.1 to 1.1:1 or 1:1.05 to 1.05:1 to obtain preferably molecular weight, mechanical properties and viscosity.

The reaction may be performed under inert gas or nitrogen atmosphere, and also performed under anhydrous condition.

Further, the polymerization may be performed at a temperature of -20°C to 60°C, preferably 0°C to 30°C.

Further, the organic solvent which can be used for the polymerization may be, specifically, selected from the group consisting of ketones such as γ-butyrolactone, 1,3-dimethyl-imidazolidinone, methylethyl ketone, cyclohexanone, cyclopentanone, 4-hydroxy-4-methyl-2-pentanone and the like; aromatic hydrocarbons such as toluene, xylene, tetramethylbenzene and the like; glycol ethers (cellosolve) such as ethyleneglycol monoethyl ether, ethyleneglycol monomethyl ether, ethyleneglycol monobutyl ether, diethyleneglycol monoethyl ether, diethyleneglycol monomethyl ether, diethyleneglycol monobutyl ether, propyleneglycol monomethyl ether, propyleneglycol monoethyl ether, dipropyleneglycol diethyl ether, triethyleneglycol monoethyl ether and the like; ethyl acetate, butyl acetate, ethyleneglycol monoethyl ether acetate, ethyleneglycol monobutyl ether acetate, diethyleneglycol monoethyl ether acetate, dipropyleneglycol monomethyl ether acetate, ethanol, propanol, ethyleneglycol, propyleneglycol, carbitol, dimethyl acetamide (DMAc), N,N-diethyl acetamide, dimethyl formamide (DMF), diethyl formamide (DEF), N-methyl pyrrolidone (NMP), N-ethyl pyrrolidone (NEP), 1,3-dimethyl-2-imidazolidinone, N,N-dimethylmethoxy acetamide, dimethyl sulfoxide, pyridine, dimethyl sulfone, hexamethyl phosphoramide, tetramethyl urea, N-methyl caprolactam, tetrahydrofuran, m-dioxane, P-dioxane, 1,2-dimethoxyethane, bis(2-methoxyethyl)ether, 1,2-bis(2-methoxyethoxy)ethane, bis[2-(2-methoxyethoxy)]ether, and a mixture thereof.

More preferably, the solvent may be a sulfoxide-based solvent such as dimethyl sulfoxide, diethyl sulfoxide and the like; a formamide-based solvent such as N,N-dimethyl formamide, N,N-diethyl formamide and the like; an acetamide-based solvent such as N,N-dimethyl acetamide, N,N-diethyl acetamide and the like; a pyrrolidone-based solvent such as N-methyl-2-pyrrolidone, N-vinyl-2-pyrrolidone and the like; a phenol-based solvent such as phenol, o-, m- or p-cresol, xylenol, halogenated phenol, catechol and the like; or hexamethyl phosphoramide, γ-butyrolactone and the like, and the solvent may be used alone or as a mixture thereof, but not limited thereto. An aromatic hydrocarbon such as xylene and toluene may be further used, and in order to accelerate dissolution of the polymer, an alkali metal salt or alkali earth metal salt may be further added to the solvent in an amount of about 50 wt% or less, based on the total amount of the solvent.

The polyamide-imide precursor composition manufactured by the method may contain the solid component in such an amount that the composition has an appropriate viscosity considering its film formation processability such as coatability. According to one embodiment, the content of the composition may be controlled to have the total content of the polymer of 5 to 25 wt%, preferably 5 to 20 wt%, more preferably 5 to 20 wt% or 5 to 15 wt%.

Further, the content of the composition may be controlled such that the polyamide-imide precursor composition has viscosity of 500 cP or higher or 1,000 cP or higher, preferably 3,000 cP or higher, and the viscosity of the polyamide-imide precursor composition may be controlled to 30,000 cP or lower or 20,000 cP or lower, preferably 18,000 cP or lower or 15,000 cP or lower. If the viscosity of the polyamide-imide precursor composition is lower than 500 cP or higher than 30,000 cP, optical properties of the polyamide-imide film may be deteriorated due to bubble formation during the process and bad surface profile.

Further, the polyamide-imide according to the present invention may have a weight average molecular weight of 10,000 to 200,000 g/mol, 20,000 to 100,000 g/mol or 30,000 to 100,000 g/mol.

Further, the polyamide-imide according to the present invention may have a molecular weight distribution (Mw/Mn) of 1.1 to 2.5, preferably. If the imidization rate, weight average molecular weight or molecular weight distribution of the polyamide-imide is out of the range defined above, there may be a difficulty in forming the film or there is a risk that the characteristics of the polyamide-imide-based film such as transmittance, heat resistance and mechanical properties may be deteriorated.

The polyamide-imide precursor composition may be in the form of a solution dissolved in an organic solvent, and in this case, for example, when the polyamide-imide precursor is synthesized in the organic solvent, the solution may be the reaction solution thus obtained itself or a solution obtained by diluting the reaction solution with another solvent. Further, when the polyamide-imide precursor is obtained as powder, the solution may be a solution obtained by dissolving the powder in an organic solvent.

Further, when preparing the solution by dissolving the polymer powder in an organic solvent, the reaction may be conducted by heating at a temperature of, preferably, 20°C to 150°C, more preferably, 20°C to 80°C.

Subsequently, the resulting polyamide-imide precursor thus obtained from the polymerization is imidized to manufacture a transparent polyamide-imide film. Specifically, the imidization process may be a chemical imidization or thermal imidization method.

For example, the polyamide-imide may be obtained by adding a dehydrating agent and an imidization catalyst to the polymerized polyamide-imide precursor solution, and then heating thereof to a temperature of 50°C to 100°C for imidization by chemical reaction, or refluxing the solution to remove alcohol for imidization.

In the chemical imidization method, the imidization catalyst may be pyridine, triethyl amine, picoline or quinoline, and also, a substituted or unsubstituted nitrogen-containing heterocyclic compound, an N-oxide compound of a nitrogen-containing heterocyclic compound, a substituted or unsubstituted amino acid compound, or an aromatic hydrocarbon compound or an aromatic heterocyclic compound having a hydroxyl group. Particularly, it may be a lower alkylimidazole such as 1,2-dimethylimidazole, N-methylimidazole, N-benzyl-2-methylimidazole, 2-methylimidazole, 2-ethyl-4-methylimidazole, 5-methylbenzimidazole and the like; an imidazole derivative such as N-benzyl-2-methylimidazole and the like; a substituted pyridine such as isoquinoline, 3,5-dimethylpyridine, 3,4-dimethylpyridine, 2,5-dimethylpyridine, 2,4-dimethylpyridine, 4-n-propylpyridine and the like, p-toluene sulfonic acid and the like.

The dehydrating agent may be an acid anhydride such as acetic acid anhydride.

Further, the imidization may be conducted by coating the precursor solution on a substrate followed by heating thereof in an oven or on a hot plate under a condition of 100°C to 300°C, and the heating may be conducted in a multi-step process at various temperatures within the said temperature range.

The organic solvent contained in the polyamide-imide precursor composition of the present invention may be the same with the polymerization solvent.

In the present invention, a silane coupling agent, a crosslinkable compound, an imidization catalyst for effectively proceeding imidization and the like may be added without negatively affecting the desired effect.

A polyamide-imide film having excellent mechanical properties as well as colorless transparency can be manufactured by introducing a polyamide structure to a rigid polyimide molecular structure to increase distance between chains thereby reducing packing between chains, and by combining a substituent having high electronegativity to a diamine structure to reduce charge transfer.

Further, the polyamide-imide-based film may be a colorless transparent polyamide-imide film having a thickness of 20 µm to 100 µm, a haziness of 2 or less, preferably 1 or less, more preferably 0.9 or less, a transmittance of at least 80% to light at a wavelength of 380 nm to 760 nm in the film thickness of 10 µm to 30 µm, and a yellowness index (YI) of about 7 or less, preferably about 5 or less, more preferably about 4 or less, or 3 or less. The film can exhibit markedly improved transparency and optical properties due to its excellent light transmittance and yellowness index.

Further, the polyamide-imide-based film may be an anisotropic film having an in-plane retardation (Rᵢₙ) of about 0 to about 100 nm and a thickness retardation (Rₜₕ) of at least about 200 nm, or an in-plane retardation (Rᵢₙ) of about 0 to about 70 nm and a thickness retardation (Rₜₕ) of at least about 300 nm.

Further, the polyamide-imide-based film may have a modulus of at least about 5.0 GP, or about 5 to about 9 GPa. Surface hardness can be measured three times per pencil under a load of 750 gf using a pencil hardness tester according to the measuring standard JIS K5400, and then degrees of scratch and dent can be observed to determine hardness. The film may have surface hardness of, preferably H or higher, more preferably 2H or higher.

Thus, in another embodiment of the present invention, an article comprising the polyamide-imide copolymer is provided.

The article maybe a film, a fiber, a coating material, an adhesive and the like, but not limited thereto. The article may be formed by a dry/wet method, a dry method, a wet method and the like using a composite composition of the copolymer and inorganic particles, but not limited thereto. Specifically, as described above, the article may be an optical film, and in the case, the composition comprising the polyamide-imide copolymer may be easily manufactured by being applied on a substrate through a spin coating method followed by being dried and cured.

The polyamide-imide according to the present invention can have excellent colorless transparent characteristic while maintaining characteristics such as heat resistance, mechanical strength and the like due to its rigid structure. Thus, it can be used in various fields such as a substrate for a device, a cover substrate for a display, an optical film, an integrated circuit (IC) package, an adhesive film, a multi-layer flexible printed circuit (FPC), a tape, a touch panel, a protection film for an optical disk and the like, and particularly, it can be suitable for a cover substrate for a display.

For example, the present invention provides a cover substrate for a display comprising the polyamide-imide film.

For example, the cover substrate for a display may has a structure wherein a device protection layer, a transparent electrode layer, a silicon oxide layer, the polyamide-imide film, a silicon oxide layer and a hard coating layer are stacked in order.

According to one embodiment, the device protection layer may be formed on at least one side of the polyamide-imide film, and may contain a urethane acrylate compound of the following Formula 10: 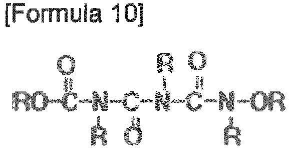 wherein, R may be each independently, a benzene group, a C₁₋₅ alkylbenzene group, a C₁₋₅ alkoxybenzene group, a cyclohexane group, a C₁₋₅ alkylcyclohexane group, a diphenylmethane group, a diphenylethane group, a dicyclohexylmethane group or a C₁₋₁₀ alkyl group.

The urethane acrylate compound may have a weight average molecular weight of 1,000 to 50,000 g/mol, and it is preferred to have 1 to 10 average urethane bonds per molecule in terms of maintaining elasticity of a coating layer and appropriate hardness to protect a device below.

According to one embodiment, the hard coating layer may be a cured layer of polyisocyanate containing an acrylate group and 2 to 5 isocyanate groups.

The transparent polyamide-imide substrate may comprise a silicon oxide layer formed between the transparent polyamide-imide film and the cured layer in terms of further enhancing solvent resistance, water vapor transmission rate and optical properties, and the silicon oxide layer may be formed by curing polysilazane.

Specifically, the silicon oxide layer may be formed by coating a solution containing polysilazane and drying thereof followed by curing the coated polysilazane, before the step of forming the coating layer on at least one side of the transparent polyamide-imide film.

The cover substrate for a display according to the present invention comprising the device protection layer may provide a transparent polyamide-imide cover substrate having not only excellent flexibility and impact resistance but also superior solvent resistance, optical properties and scratch resistance and low water vapor transmission rate.

According to another embodiment of the present invention, a display device comprising the article is provided. Specifically, the display device may be a liquid crystal display device (LCD), an organic light emitting diode (OLED) and the like, but not limited thereto.

### [Best Mode Carrying out the Invention]

The present invention will be explained in detail with reference to the following examples, including test examples. However, these examples are provided for illustrative purposes only and are not intended to limit the scope of the invention.

### <Example 1> TFMB(1)/BPDA(0.5)_TPC(0.5)

N,N-dimethyl acetamide (DMAc) 200 g was filled in a reactor under nitrogen atmosphere, and then 2,2'-bis(trifluoromethyl)-4,4'-biphenyl diamine (TFMB) 21.7 g was dissolved while maintaining the temperature of the reactor to 25°C. 3,3',4,4'-biphenyltetracarboxylic dianhydride (BPDA) 10 g was added to the TFMB solution at the same temperature, and dissolved with stirring for a predetermined period of time. After enough stirring, the temperature was lowered to 0°C, terephthaloyl chloride (TPC) 7 g was added thereto and stirring was continued to obtain a polyamide-imide precursor solution. Pyridine and acetic anhydride were added to the solution and stirred enough, and then precipitated with a mixture of methanol and water. The precipitated polyamide-imide powder was dried and dissolved in DMAc to obtain a polyamide-imide precursor solution of a solid content of 13%.

The composition solution was spin coated on a glass substrate in thickness of about 30 µm. The polyamide-imide composition-coated glass substrate was placed in an oven, heated at a rate of 4°C/min, and then cured at 300°Cfor 60 min. After completing the curing process, the film formed on the glass substrate was stripped from the substrate to obtain a film.

### <Example 2> TFMB(1)/BPDA(0.4)_TPC(0.6)

The procedure of Example 1 was repeated except that the ratio of the BPDA and the TPC was 0.4 mol: 0.6 mol.

### <Example 3> TFMB(1)/BPDA(0.3)_TPC(0.7)

The procedure of Example 1 was repeated except that the ratio of the BPDA and the TPC was 0.3 mol: 0.7 mol.

### <Test Example 1>

Optical properties such as transmittance, yellow index (YI) and haziness of each polyamide-imide film manufactured in Examples 1 to 3 were measured, and the results are shown in the following Table 1.

Haziness was measured using a Haze Meter HM-150 by a method according to ASTM D1003.

Yellowness index (YI) was measured using a color difference meter (Color Eye 7000A).

In-plane retardation (Rᵢₙ) and thickness retardation (Rₜₕ) of the film were measured using Axoscan.

Surface hardness was measured three times per pencil under a load of 750 gf using a pencil hardness tester according to the measuring standard JIS K5400, and then degrees of scratch and dent were observed to determine hardness.

**Table 1**

| | BPDA(0.5)/TPC(0.5) Example 1 | BPDA(0.4)/TPC(0.6) Example 2 | BPDA(0.3)/TPC(0.7) Example 3 |
|---|---|---|---|
| Thickness (µm) | 33 | 31 | 32 |
| YI | 3.4 | 3.1 | 2.9 |
| Haze | 0.83 | 0.79 | 0.75 |
| Rₜₕ | 520 | 553 | 652 |
| Rᵢₙ | 67 | 67 | 67 |
| Hardness (750 gf) | 2H 1/3 | 2H 0/3 | 2H 0/3 |

From the results of Example 1 to Example 3, it can be found that the polyamide-imide according to the present invention has not only excellent haziness and yellowness index but also superior hardness.

### <Example 4>

0.03 g (0.03 wt%) of amorphous silica particles having a OH group bound to the surface thereof were added to N,N-dimethyl acetamide (DMAc) at a dispersion concentration of 0.1%, and ultrasonic treatment was performed until the solvent became transparent, followed by dissolving 100 g of the polyamide-imide solid powder manufactured in Example 3 in 670 g of DMAc, thus obtaining a 13 wt% solution. The solution thus obtained was coated on a stainless plate, cast to the thickness of 340 µm, and dried using hot air of 130°C for 30 min, after which the resulting film was stripped from the stainless plate and then fixed to a frame with pins. The film-fixed frame was placed in a vacuum oven, slowly heated from 100°C to 300°C for 2 hrs, and then slowly cooled, and a polyamide-imide film was separated from the frame and then subjected to final thermal treatment at 300°C for 30 min.

10 g of polysilazane (OPTS25 20 wt%, Az Materials) was dissolved to 10 wt% in 10 ml of dibutyl ether (DBE), and the resulting solution was coated on one side of the polyamide-imide film by means of a wire, and dried at 80°C, thus forming a 0.5 µm thick polysilazane film. Subsequently, the film was allowed to stand at room temperature for about 5 min, and then thermally cured at about 250°C, thus forming a 0.5 µm thick silicon oxide.

10 g of polyisocyanate (KLS-009 55 wt%, Natoco) was dissolved in 10 mL of PGMEA, and the resulting solution was coated on one side of the silicon oxide layer by means of a bar coater, and dried at 80°C, thus forming a 10 µm thick coating film. Subsequently, two wavelengths of 312 nm and 365 nm were simultaneously irradiated at energy of 100 mW/cm² for 10 sec using a UV curing machine, thus forming a 10 µm thick hard coating layer.

Then, ITO was deposited on the other side of the silicon oxide layer opposite the hard coating layer using a sputter, thus forming a transparent electrode layer. 10 g of a urethane acrylate compound (KLH-100, Natoco) was dissolved in 10 g of methylethyl ketone (MEK), and then the resulting solution having the dissolved urethane acrylate compound was coated on the transparent electrode layer by means of a bar coater and then dried at 80°C, thus obtaining a coating film 10 µm thick. Then, two wavelengths of 312 nm and 365 nm were simultaneously irradiated on the coating film at energy of 100 mW/cm² for 10 sec using a UV curing machine, thus forming a 10 µm thick device protection layer, ultimately manufacturing a cover substrate for a display wherein the device protection layer, the transparent electrode layer, the silicon oxide layer, the polyamide-imide film, the silicon oxide layer and the hard coating layer were stacked in order.

### <Method for evaluating physical properties>

Physical properties were measured according to the following methods, and the results are shown in Table 2.

### (1) Yellowness index (YI)

Yellowness index was measured by using a color difference meter (Color Eye 7000A).

### (2) Water permeability (gm⁻²/day)

Water vapor transmission rate (WVTR) was measured by using a WVTR tester (MOCON/US/Aquatran-model-1).

### (3) Pencil hardness

A line 50 mm long was drawn five times on a sample with a Mitsubishi test pencil (UNI) at a rate of 180 mm/min under a load of 1 kg using an electric pencil hardness tester, after which pencil hardness was measured when there was no surface scratch.

### (4) Adhesiveness

According to a standard test method (ASTM D3359), a sample was cross cut and taped.

### (5) Flexibility

A sample was wound and unwound 10,000 times on and from a cylinder having a diameter of 10 mm, and cracking of the film was observed with the naked eyes and using a microscope. The case where no crack is present is represented by 'OK'.

### (6) Scratch resistance

A sample was rubbed back and forth 500 times with a steelwool at a 100 mm length at a rate of 50 mm/sec under a load of 500 g, after which the number of scratches was counted with the naked eyes and using an optical microscope.

### (7) Impact resistance

A sample was placed on a 0.7T glass and a ball was dropped at a height of 50 cm from the glass, and damage and cracking of the glass were observed with the naked eyes and using an optical microscope. The case where no fine crack is present is represented by 'OK'.

**TABLE 2**

| | YI | WVTR (gm⁻²/day) | Pencil hardness | Adhesiveness | Flexibility | Scratch resistance (Number) | Impact resistance |
|---|---|---|---|---|---|---|---|
| Example 4 | 4 | 0.1 | 6H | 5B | OK | 0 | OK |

Although specific embodiments of the present invention are described in detail as described above, it will be apparent to those skilled in the art that the specific description is merely desirable exemplary embodiment. Therefore, the substantial scope of the present invention is defined by the accompanying claims.

## Claims

1. Polyamide-imide consisting of a repeating structure of the following Formula 1a and a repeating structure of the following Formula 1b together: 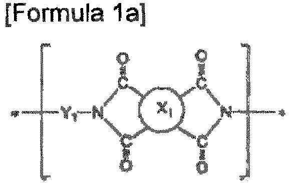 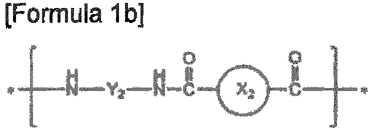 wherein, the compounds of the Formula 1a and the Formula 1b are the repeating structures of the following Formula 1a-1 and Formula 1b-1:

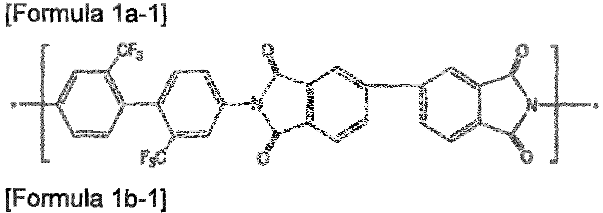

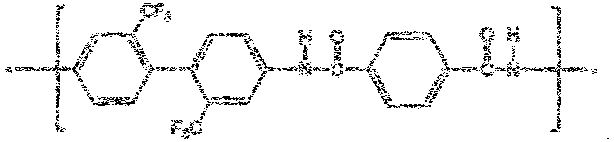

2. The polyamide-imide according to claim 1, wherein the repeating structure of the Formula 1a and the repeating structure of the Formula 1b are polymerized at molar ratio of 1:5 to 1:1.

3. The polyamide-imide according to claim 1, wherein the repeating structure of the Formula 1a and the repeating structure of the Formula 1b are polymerized in the form of a random copolymer.

4. A method for manufacturing the polyamide-imide of claim 1 consisting of the following steps of:
stirring a solution of trifluoromethyl biphenyl diamine adding biphenyltetracarboxylic dianhydride and tetraphthaloyl chloride to the diamine solution followed by reacting thereof to prepare a polyamide-imide precursor; and
imidizing the polyamide-imide precursor.

5. The method for manufacturing the polyamide-imide according to claim 4, wherein the tetracarboxylic dianhydride and the tetraphthaloyl chloride are added at molar ratio of 1:5 to 1:1.

6. The method for manufacturing the polyamide-imide according to claim 4, wherein biphenyltetracarboxylic dianhydride, tetraphthaloyl chloride, and trifluoromethyl biphenyl diamine are reacted at molar ratio of 1:1.1 to 1.1:1.

7. A high strength transparent polyamide-imide film comprising the polyamide-imide according to claim 1.

8. The high strength transparent polyamide-imide film according to claim 7 which has haziness (Haze) of 2 or lower and pencil strength of 2H or higher

9. The high strength transparent polyamide-imide film according to claim 8 which has yellowness index (YI) of 5 or lower.

10. A cover substrate for a display comprising the polyamide-imide film according to any one claim of claim 7 to claim 9.

11. The cover substrate for a display according to claim 10, which further comprises a device protection layer containing a urethane acrylate compound.

12. The cover substrate for a display according to claim 10, which has a structure wherein the device protection layer, a transparent electrode layer, a silicon oxide layer, the polyamide-imide film, a silicon oxide layer and a hard coating layer are stacked in order.

13. The cover substrate for a display according to claim 12 wherein the hard coating layer is a cured layer of polyisocyanate containing an acrylate group and 2 to 5 isocyanate groups.

14. The cover substrate for a display according to claim 12 wherein the silicon oxide layer is formed by coating a solution containing polysilazane and drying thereof followed by curing the coated polysilazane.

## Patentansprüche

1. Polyamidimid, bestehend aus sowohl einer wiederholenden Struktur der folgenden Formel 1a als auch einer wiederholenden Struktur der folgenden Formel ib: 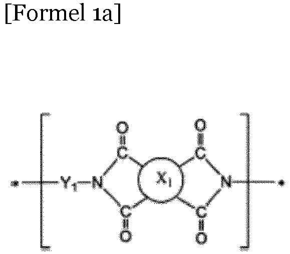 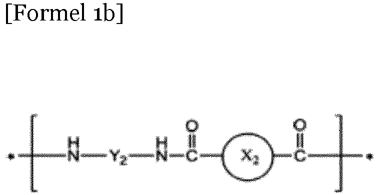 wobei die Verbindungen der Formel 1a und der Formel 1b die wiederholenden Strukturen der folgenden Formel 1a-1 und Formel 1b-1 sind

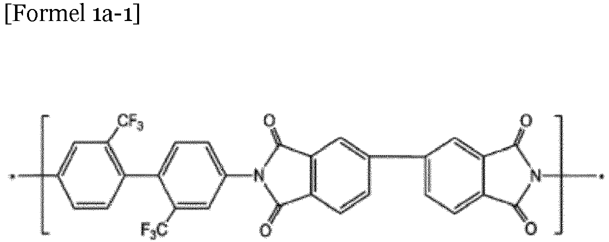

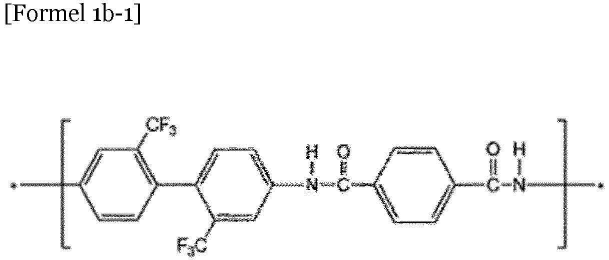

2. Polyamidimid nach Anspruch 1, wobei die wiederholende Struktur der Formel 1a und die wiederholende Struktur der Formel 1b in einem molaren Verhältnis von 1:5 bis 1:1 polymerisiert sind.

3. Polyamidimid nach Anspruch 1, wobei die wiederholende Struktur der Formel 1a und die wiederholende Struktur der Formel 1b in der Form eines zufälligen Copolymers polymerisiert sind.

4. Verfahren zum Herstellen des Polyamidimids nach Anspruch 1, bestehend aus den folgenden Schritten:
Rühren einer Lösung von Trifluormethylbiphenyldiamin;
Hinzugeben von Biphenyltetracarboxyldianhydrid und Tetraphthaloylchlorid zu der Diaminlösung gefolgt durch Reagieren davon, um einen Polyamidimidvorläufer herzustellen; und
Imidisieren des Polyamidimidvorläufers.

5. Verfahren zum Herstellen des Polyamidimids nach Anspruch 4, wobei das Tetracarboxyldianhydrid und das Tetraphthaloylchlorid in einem molaren Verhältnis von 1:5 bis 1:1 zugegeben werden.

6. Verfahren zum Herstellen des Polyamidimids nach Anspruch 4, wobei Biphenyltetracarboxyldianhydrid, Tetraphthaloylchlorid und Trifluormethylbiphenyldiamin in einem molaren Verhältnis von 1:1,1 bis 1,1:1 reagiert werden.

7. Transparenter Polyamidimidfilm mit hoher Stärke, der das Polyamidimid nach Anspruch 1 umfasst.

8. Transparenter Polyamidimidfilm mit hoher Stärke nach Anspruch 7, der eine Dunstigkeit (Trübung) von 2 oder weniger und eine Bleistiftfestigkeit von 2H oder mehr hat.

9. Transparenter Polyamidimidfilm mit hoher Stärke nach Anspruch 8, der einen Vergilbungsindex (YI) von 5 oder weniger hat.

10. Abdeckungssubstrat für eine Anzeige, umfassend den Polyamidmidfilm nach einem der Ansprüche 7 bis 8.

11. Abdeckungssubstrat für eine Anzeige nach Anspruch 10, die ferner eine Vorrichtungsschutzschicht, enthaltend eine Urethanacrylatverbindung, umfasst.

12. Abdeckungssubstrat für eine Anzeige nach Anspruch 10, die eine Struktur hat, in der die Vorrichtungsschutzschicht, eine transparente Elektrodenschicht, eine Silikonoxidschicht, der Polyamidimidfilm, eine Siliziumoxidschicht und eine Hartbeschichtungsschicht in dieser Reihenfolge gestapelt sind.

13. Abdeckungssubstrat für eine Anzeige nach Anspruch 12, wobei die harte Beschichtungsschicht eine gehärtete Schicht eines Polyisocyanat, enthaltend eine Acrylatgruppe und 2 bis 5 Isocyanatgruppen, ist.

14. Abdeckungssubstrat für eine Anzeige nach Anspruch 1, wobei die Siliziumoxidschicht durch Beschichten einer Lösung, enthaltend Polysilazan und Trocknen davon, gefolgt durch Härten des beschichteten Polysilazans, gebildet wird.

## Revendications

1. Polyamide-imide comprenant une structure répétitive de la Formule 1a ci-après et une structure répétitive de la Formule 1b ci-après ensemble : 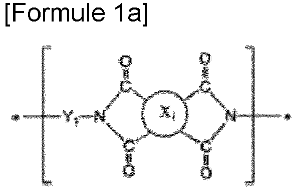 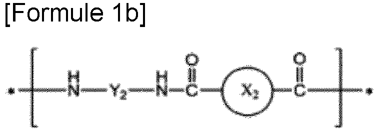 dans lequel,
les composés de la Formule 1a et de la Formule 1b sont les structures répétitives de la Formule 1a-1 et de la Formule 1b-1 ci-après :

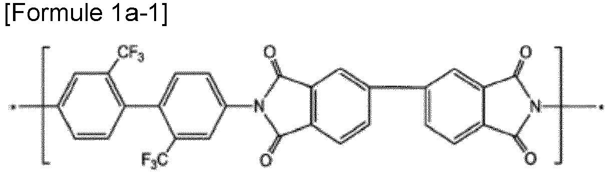

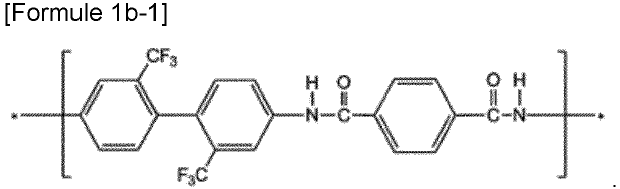

2. Polyamide-imide selon la revendication 1, dans lequel la structure répétitive de la Formule 1a et la structure répétitive de la Formule 1b sont polymérisées à un rapport molaire compris entre 1:5 et 1:1.

3. Polyamide-imide selon la revendication 1, dans lequel la structure répétitive de la Formule 1a et la structure répétitive de la Formule 1b sont polymérisées sous la forme d'un copolymère aléatoire.

4. Procédé de fabrication du polyamide-imide selon la revendication 1, comprenant les étapes suivantes consistant à :
agiter une solution de biphényldiamine de trifluorométhyle ;
ajouter un dianhydride biphényltétracarboxylique et un chlorure de téréphtaloyle à la solution de diamine, puis les faire réagir pour préparer un précurseur de polyamide-imide ; et
imidiser le précurseur de polyamide-imide.

5. Procédé de fabrication du polyamide-imide selon la revendication 4, dans lequel le dianhydride de tétracarboxylique et le chlorure de téréphtaloyle sont ajoutés à un rapport molaire compris entre 1:5 et 1:1.

6. Procédé de fabrication du polyamide-imide selon la revendication 4, dans lequel on fait réagir un dianhydride biphényltétracarboxylique, un chlorure de téréphtaloyle et un biphényldiamine de trifluorométhyle à un rapport molaire compris entre 1:1,1 et 1,1:1.

7. Film de polyamide-imide transparent à résistance élevée comprenant le polyamide-imide selon la revendication 1.

8. Film de polyamide-imide transparent à résistance élevée selon la revendication 7, lequel a une turbidité (trouble) égale ou inférieure à 2 et une résistance au crayon égale ou supérieure à 2H.

9. Film de polyamide-imide transparent à résistance élevée selon la revendication 8, lequel a un indice de jaune (YI) égal ou inférieur à 5.

10. Substrat de couvercle pour un affichage comprenant le film de polyamide-imide selon l'une quelconque des revendications de la revendication 7 à la revendication 8.

11. Substrat de couvercle pour un affichage selon la revendication 10, lequel comprend en outre une couche de protection de dispositif contenant un composé d'acrylate d'uréthane.

12. Substrat de couvercle pour un affichage selon la revendication 10, lequel a une structure dans laquelle la couche de protection de dispositif, une couche d'électrode transparente, une couche d'oxyde de silicium, le film de polyamide-imide, une couche d'oxyde de silicium et une couche de revêtement dur sont empilés dans cet ordre.

13. Substrat de couvercle pour un affichage selon la revendication 12, dans lequel la couche de revêtement dur est une couche durcie de polyisocyanate contenant un groupe acrylate et 2 à 5 groupes isocyanate.

14. Substrat de couvercle pour un affichage selon la revendication 12, dans lequel la couche d'oxyde de silicium est formée en l'enduisant d'une solution contenant du polysilazane et en la séchant, puis en durcissant le polysilazane revêtu.
